(19) **Europäisches Patentamt**

**European Patent Office**

**Office européen des brevets**

(11) **EP 1 374 479 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(21) Anmeldenummer: **02729776.1**

(22) Anmeldetag: **12.03.2002**

(51) Int Cl.:
***H04L 9/30*** (2006.01)

(86) Internationale Anmeldenummer:
**PCT/DE2002/000877**

(87) Internationale Veröffentlichungsnummer:
**WO 2002/078246 (03.10.2002 Gazette 2002/40)**

(54) **Verfahren zur rechnergestützten erzeugung von öffentlichen Schlüsseln zur verschlüsserung von nachrichten und Vorrichtung zur durchführung des verfahrens**

Method for the computer-assisted production of public keys for encoding information and device for carrying out said method

Procédé de production, assisté par ordinateur, de cles publiques pour le cryptage d'informations, et dispositif pour la mise en oeuvre de ce procédé

(84) Benannte Vertragsstaaten:
**AT BE CH CY DE DK ES FI FR GB GR IE IT LI LU MC NL PT SE TR**

(30) Priorität: **22.03.2001 DE 10114157**

(43) Veröffentlichungstag der Anmeldung:
**02.01.2004 Patentblatt 2004/01**

(73) Patentinhaber: **Deutsche Telekom AG**
**53113 Bonn (DE)**

(72) Erfinder: **MERZENICH, Klaus**
**64319 Pfungstadt (DE)**

(56) Entgegenhaltungen:
- **CHIN-CHEN CHANG ET AL: "A STRATEGY FOR TRANSFORMING PUBLIC-KEY CRYPTOSYSTEMS INTO IDENTITY-BASED CRYPTOSYSTEMS" PROCEEDINGS OF THE ANNUAL INTERNATIONAL CARNAHAN CONFERENCE ON SECURITY TECHNOLOGY. TAIPEI, OCT. 1 - 3, 1991, NEW YORK, IEEE, US, Bd. CONF. 25, 1. Oktober 1991 (1991-10-01), Seiten 68-72, XP000300409 ISBN: 0-7803-0120-X**
- **SHAMIR A: "IDENTITY-BASED CRYPTOSYSTEMS AND SIGNATURE SCHEMES" LECTURE NOTES IN COMPUTER SCIENCE, SPRINGER VERLAG, NEW YORK, NY, US, 1985, Seiten 47-53, XP000675444 ISSN: 0302-9743 in der Anmeldung erwähnt**

EP 1 374 479 B1

**Beschreibung**

Die Erfindung betrifft ein Verfahren zur rechnergestützten Erzeugung von öffentlichen Schlüsseln zur Verschlüsselung von Nachrichten gemäß der im Oberbegriff des Anspruches 1 angegebenen Art, sowie ein System zur Durchführung des Verfahrens gemäß Anspruch 8.

Verfahren der asymmetrischen Kryptographie ermöglichen eine sehr sichere Verschlüsselung von Informationen. Ein Nutzer besitzt einen öffentlichen und einen privaten Schlüssel. Der private Schlüssel ist üblicherweise nur dem Nutzer bekannt; der öffentliche Schlüssel wird dagegen wie eine Telefonnummer veröffentlicht und dient Dritten dazu, Nachrichten für den Nutzer zu verschlüsseln. Die Veröffentlichung wird in der Regel entweder vom Nutzer selbst oder von Schlüsselverteilzentralen, sogenannten Trusted-Third-Parties TTTP oder Trust-Centers vorgenommen. Derartige Verfahren sind auch unter der Bezeichnung Public-Key-Verfahren bekannt.

Zum Verschlüsseln einer Nachricht verwendet ein Sender den einem Nutzer bzw. Empfänger zugeordneten öffentlichen Schlüssel, den er beispielsweise im Internet von einer Schlüsselverteilzentrale laden kann. Die so verschlüsselte Nachricht kann dann nur derjenige entschlüsseln, der im Besitz des privaten Schlüssels ist, der zu dem öffentlichen Schlüssel des Empfängers passt.

Eines der bekanntesten asymmetrischen Kryptographieverfahren ist das RSA-Verfahren, das nach seinen Erfindern Rivest, Shamir und Adleman benannt ist. Die hohe Sicherheit des RSA-Verfahrens beruht auf der Schwierigkeit des Faktorisierungsproblems: es ist zwar einfach, zwei große Primzahlen zu finden und sie miteinander zu multiplizieren (dieses Produkt wird RSA-Zahl genannt), aber es ist praktisch unmöglich, die Primfaktoren herauszufinden, wenn man lediglich die RSA-Zahl kennt.

Ein mit dem RSA-Verfahren erzeugter öffentlicher Schlüssel öS setzt sich aus zwei Teilen (öS1, öS2) zusammen. Der erste Teil öS1 eines öffentlichen Schlüssels ist die RSA-Zahl. Der zweite Teil öS2 ist eine Zufallszahl, die teilerfremd zu (a-1)(b-1) sein muss, wenn a, b die beiden erwähnten Primzahlen sind. Ein zu dem öffentlichen Schlüssel öS passender privater Schlüssel pS wird mit der folgenden Gleichung berechnet: $pS*öS2 = 1 \bmod((a-1)(b-1))$. Eine Berechnung des privaten Schlüssel pS aus dem öffentlichen Schlüssel öS ist ähnlich schwierig und aufwendig wie die oben erwähnte Zerlegung eines Produkts in seine Primfaktoren. Dadurch ist es nur unter sehr hohem Rechenaufwand möglich, aus einem öffentlichen Schlüssel den dazu gehörigen privaten Schlüssel zu berechnen.

Zur Verschlüsselung verwendet das RSA-Verfahren die folgende Formel: $c = m^{öS2} \bmod öS1$, wobei m eine Klartext-Nachricht und c die verschlüsselte Nachricht ist. Das Entschlüsseln erfolgt nach der Formel: $m = c^{pS} \bmod öS1$. In beiden Formeln wird die RSA-Zahl öS1 verwendet.

Trotz des sehr hohen Sicherheitsstandards des RSA-Verfahrens besitzt dieses wie alle anderen Verfahren der asymmetrischen Kryptographie den Nachteil, dass ein Sender, der eine Nachricht für einen Empfänger verschlüsseln will, entweder bereits in Kenntnis des öffentlichen Schlüssels sein muss oder diesen von einer Schlüsselverteilzentrale anfordern muss.

Bei dem bekannten, mittlerweile weit verbreitetem und auf RSA basierendem Programm PGP (Pretty Good Privacy) erfolgt beispielsweise die Verteilung öffentlicher Schlüssel über spezielle Internet-Sites. Ein Sender kann sich über das Internet den öffentlichen Schlüssel eines Empfängers von einer derartigen Internet-Site beschaffen, sofern der Empfänger diesen dort hinterlegt hat. Die Übertragung eines öffentlichen Schlüssels kann auch per E-Mail oder durch elektronische Datenträger wie Disketten erfolgen.

Allerdings bergen derartige Übermittlungswege eines öffentlichen Schlüssels im wesentlichen zwei Nachteile:

Fällt die Schlüsselverteilzentrale aus, kann der Sender nicht den öffentlichen Schlüssel des Empfängers laden. Beispielsweise könnte ein Server-Äusfall in der Schlüsselverteilzentrale die Verteilung von öffentlichen Schlüsseln wesentlich beeinträchtigen. Ähnliches gilt für die Übertragung per E-Mail. Fällt ein E-Mail-Server aus, kann auch hier kein öffentlicher Schlüssel mehr übertragen werden.

Ein weiterer Nachteil, der insbesondere bei der Beschaffung öffentlicher Schlüssel über das Internet auftritt, besteht darin, dass es keine absolute Sicherheit über die Authentizität der Schlüsselverteilzentrale gibt. Insbesondere gibt es keine Garantie dafür, dass die von der Schlüsselverteilzentrale verteilten öffentlichen Schlüssel auch tatsächlich den angegebenen Empfängern zugeordnet sind. Denkbar wäre beispielsweise, das sich bei einer Anforderung eines öffentlichen Schlüssels über das Internet eine vertrauensunwürdige Internet-Site als Schlüsselverteilzentrale ausgibt und unter Vortäuschung eines bestimmten Empfängers einen falschen öffentlichen Schlüssel überträgt. Auch bei einer Übertragung eines öffentlichen Schlüssels per E-Mail ist durch Manipulation Missbrauch möglich.

Um dieses Problem zu umgehen, wurde von A. Shamir in seinem Aufsatz "Identity-Based crypto Systems and Signature Schemes", vorgeschlagen, anstatt der Erzeugung eines öffentlichen und privaten Schlüssels und Bekanntgabe des öffentlichen Schlüssels, eindeutige, einen Empfänger identifizierende Daten als öffentlichen Schlüssel zu verwenden. Als Beispiele für diese eindeutigen Daten wird von A.Shamir der Name des Empfängers, die Netzwerk-Adresse seines Computers, seine Sozialversicherungsnummer, seine Adresse, Büronummer oder Telefonnummer oder eine Kombinationen derartiger Daten genannt. Einzige Voraussetzung ist, dass die Daten den Empfänger eindeutig identifizieren.

Zum Senden einer verschlüsselten Nachricht an einen Empfänger muss ein Sender die Nachricht mit seinem eigenen privaten Schlüssel signieren; die signierte Nachricht wird unter Verwendung von den Empfänger eindeutig identifizierenden Daten, beispielsweise seinen Namen und die Netzwerk-Adresse seines Rechners, chiffriert. Der Empfänger entschlüsselt die empfangene Nachricht mittels seines eigenen privaten Schlüssels und verifiziert die Signatur des Senders unter Benutzung des Namens und der Netzwerk-Adresse des Rechners des Senders als Verifikationsschlüssel. Die Gefahr des Missbrauchs ist hier geringer als bei reinen Public-Key-Systemen, da durch die Identifikations-Daten von Sender und Empfänger zumindest ein gewisser Vertraulichkeitsgrad gewährleistet ist.

Zur Realisierung des von A.Shamir vorgeschlagenen Verfahrens müssen die privaten Schlüssel jedoch von einer Zentrale für jeden Benutzer erzeugt werden. Um Missbrauch zu verhindern, schlägt A. Shamir daher vor, an die Benutzer sogenannte Smart-Cards zu verteilen, die den jeweiligen privaten Schlüssel eines Benutzers enthalten. Im Gegensatz zu den Eingangs erwähnten Verschlüsselungsverfahren liegt also die Erzeugung von Schlüsseln nicht in der Hand der Benutzer, sondern wird von einer Zentrale vorgenommen. Dies bedingt jedoch einen enormen Verwaltungsaufwand. Zudem kann die Zentrale nicht einfach als Internet-Site zum bloßen Verteilen von öffentlichen Schlüsseln aufgebaut sein, sondern muss zentral Schlüssel für Benutzer erzeugen und an diese weitergeben. Im Falle des Konzepts mit den Smart-Cards ist dieser Vorschlag zudem äußerst kostenintensiv. Fraglich ist auch, ob eine derartige Smart-Card auf eine breite Akzeptanz stoßen würde, da ein nicht unerheblicher Geräteaufwand zum Lesen der Smart-Card bei den Benutzern erforderlich wäre.

Aus der Veröffentlichung "Chin-chen chan et al; a strategy for transforming public-key cryptosystems into indentity-based cryptosystems; proceedings of the annual international carnahan conference on security technology, Taipei, oct. 1-3, 1991, New York, IEEE, US, Bd. Conf 25.1. Oktober 1991 (1991-10-01), Seiten 68 - 72, XP000300409 ISBN: 0-7803-0120-X" ist ein Verfahren zur Erzeugung von öffentlichen Schlüsseln zur Verschlüsselung von Nachrichten bekannt. Hierbei wird zwar zur Erzeugung des öffentlichen Schlüssels eine den Empfänger eindeutig kennzeichnende Information verwendet. Allerdings kann der Sender hieraus nicht unabhängig, d. h. ohne empfängerindividuelle Informationen von der Schlüsselverteilzentrale, den öffentlichen Schlüssel des Empfängers berechnen. Auch ändern sich die Schlüssel bei Teilnahme eines weiteren Nutzers an diesem Kryptosystem.

Der Erfindung liegt daher die Aufgabe zugrunde, ein Verfahren zur rechnergestützten Erzeugung von öffentlichen Schlüsseln zur Verschlüsselung von Nachrichten gemäß der im Oberbegriff des Anspruches 1 angegebenen Art derart weiter zu bilden, dass unter Vermeidung der genannten Nachteile eine zuverlässige und sichere Verteilung öffentlicher Schlüssel gewährleistet ist, wobei sich der hierfür erforderliche technische Aufwand in Grenzen halten soll.

Diese Aufgabe wird für das Verfahren durch die gekennzeichneten Merkmale des Anspruches 1 in Verbindung mit seinen Oberbegriffsmerkmalen und für die Vorrichtung durch den Anspruch 8 gelöst.

Der Erfindung liegt die Erkenntnis zugrunde, dass die eingangs genannten Nachteile dadurch überwunden werden können, indem ein öffentlicher Schlüssel zum Verschlüsseln einer Nachricht für einen Empfänger zumindest teilweise unter Berücksichtigung von den Empfänger eindeutig bezeichnenden bzw. identifizierenden Daten berechenbar ist.

Dieses Verfahren bietet vor allem zwei Vorteile: einerseits ist es sehr zuverlässig und bietet eine hohe Funktionssicherheit, da ein Sender zum Verschlüsseln einer Nachricht für den Empfänger diese mittels eines teilweise selbst berechneten bzw. erzeugten öffentlichen Schlüssel verschlüsseln kann. Ein Laden des öffentlichen Schlüssels eines Empfängers ist daher nicht mehr wie bei herkömmlichen Public-Key-Systemen erforderlich. Andererseits wird das Risiko verringert, dass ein öffentlicher Schlüssel manipuliert wird, da der Sender zumindest teilweise an der Erzeugung des öffentlichen Schlüssels mitwirkt und hierbei in Kenntnis bestimmter, den Empfänger bezeichnender bzw. identifizierender Daten sein muss.

Nach der Erfindung umfasst daher ein öffentlicher Schlüssel eines Empfängers zwei Teile. Ein erster Teil des öffentlichen Schlüssels ist für alle Empfänger einer verschlüsselten Nachricht gleich. Ein zweiter Teil des öffentlichen Schlüssels wird unter Berücksichtigung von Daten über den Empfänger berechnet. Der erste Teil des öffentlichen Schlüssels kann beliebig publiziert werden, beispielsweise über elektronische Speichermedien wie Disketten, CD-ROMs oder auch druckschriftlich. Er ist kürzer als der komplette öffentliche Schlüssel und erfordert daher zum Übertragen, beispielsweise über das Internet, weniger Zeit. Zudem sind weniger Speicherressourcen zur Speicherung des ersten Teils des öffentlichen Schlüssels insbesondere bei einem Sender oder in einer Schlüsselverteilzentrale erforderlich.

In der erfindungsgemäßen Ausführungsform des Verfahrens ist der erste Teil des öffentlichen Schlüssels nicht durch 3 teilbar. Aus einer Adresse des Empfängers wird ein Hash-Wert berechnet. Dieser Hash-Wert besitzt eine derartige Länge, dass 3 potenziert mit dem größtmöglichen Hash-Wert kleiner als die Hälfte des ersten Teils des öffentlichen Schlüssels ist. Aus dem Hash-Wert lässt sich die Adresse nicht "zurückberechnen". Der zweite Teil des öffentlichen Schlüssels wird dann dadurch berechnet, dass 3 mit dem berechneten Hash-Wert potenziert wird. Dies hat sich als guter Kompromiss zwischen Sicherheit und Berechnungsaufwand erwiesen.

Vorzugsweise wird der erste Teil des öffentlichen Schlüssels von mindestens einer Schlüssel-verteilzentrale bekannt gegeben, d.h. zur Verfügung gestellt. Im Internet kann dies mindestens eine Schlüsselverteilzentrale, beispielsweise eine Internet-Site, sein. Um eine hohe Ausfallsicherheit zu erreichen, kann die Schlüsselverteilzentrale als eine besonders ausfallsichere und zuverlässige Internet-Site ausgebildet sein.

Basierend auf dem bekannten RSA-Verfahren, das sich zur Verschlüsselung als besonders sicher und zuverlässig erwiesen hat, wird in einer bevorzugten Ausführungsform des Verfahrens der erste Teil des öffentlichen Schlüssels als Produkt zweier Primzahlen berechnet, die nur der Schlüsselverteilzentrale bekannt sind. Diese beiden Primzahlen dienen auch zur Erzeugung des dem Empfänger zugeordneten privaten Schlüssels durch die Schlüsselverteilzentrale. Wichtig ist hierbei, dass die beiden zur Erzeugung des privaten Schlüssels und ersten Teil des öffentlichen Schlüssels benutzten Primzahlen geheim gehalten werden und nur der Schlüsselverteilzentrale bekannt sind.

Um eine besonders hohe Authentizität des Verfahrens zu gewährleisten, sollte der vom Sender selbst berechnete zweite Teil des öffentlichen Schlüssels dem Empfänger eindeutig zugeordnet sein. Dies wird vorzugsweise dadurch gewährleistet, dass bei der Berechnung des zweiten Teils des öffentlichen Schlüssels eine dem Empfänger zugeordnete Telefonnummer, Adresse, E-Mail-Adresse, seine Adresse und sein Geburtsdatum und/oder dergleichen individuelle Daten des Empfängers verwendet werden. Diese individuellen Daten müssen dem Sender, der den zweiten Teil des öffentlichen Schlüssels berechnet, bekannt sein. Sie können beispielsweise mündlich zwischen Sender und Empfänger ausgetauscht werden, was eine besonders hohe Sicherheit bedingt. Ist keine derartig hohe Sicherheit erforderlich, könnten diese individuellen Daten vom Empfänger auch beispielsweise über seine eigene Homepage bekannt gegeben werden oder vom Sender aus einem öffentlichen Verzeichnis, wie beispielsweise einem Telefonbuch, herausgesucht werden.

Eine Funktion zur Berechnung des zweiten Teils des öffentlichen Schlüssels sollte vorzugsweise die folgenden, für den RSA-Algorithmus zumindest ähnlich geltenden Bedingungen erfüllen:

$$öS2 \; < \; (a-1)(b-1).$$

$$öS2 \; \text{teilerfremd zu} \; (a-1)(b-1).$$

Der zweite Teil des öffentlichen Schlüssels ist hier als öS2 und die beiden Primzahlen sind als a, b bezeichnet. Die Funktion zur Berechnung des zweiten Teils des öffentlichen Schlüssels kann beliebig festgelegt werden. Sie braucht lediglich die oben genannten Bedingungen erfüllen, um das erfindungsgemäße Verfahren mit einer zu RSA vergleichbar hohen Sicherheit auszustatten. Da die beiden Primzahlen a, b von der Schlüsselverteilzentrale geheim gehalten werden, sollte die Funktion in der Lage sein, den zweiten Teil des öffentlichen Schlüssels zwar unter Einhaltung der oben genannten Bedingungen, aber ohne Kenntnis der beiden Primzahlen zu berechnen.

Sowohl Sender als auch Schlüsselverteilzentrale sollten die gleiche Funktion zur Berechnung des zweiten Teils des öffentlichen Schlüssels und des privaten Schlüssels eines Empfängers verwenden. Vorzugsweise wird diese Funktion mittels eines Rechenprogramms realisiert und an alle Benutzer des Systems weitergegeben, sodass jeder Sender die gleiche Berechnungsfunktion wie die Schlüsselverteilzentralen einsetzt und die von den Sendern berechneten zweiten Teile der öffentlichen Schlüssel zu den entsprechenden privaten Schlüsseln der Empfänger passen.

Eine erfindungsgemäße Vorrichtung zur Durchführung des Verfahrens weist

- eine Internet-Site als Schlüsselverteilzentrale, mittels der ein erster Teil aller öffentlichen Schlüssel zum Herunterladen zur Verfügung steht,
- Mittel zum Berechnen des ersten Teils aller öffentlicher Schlüssel und privater Schlüssel, die Empfängern zugeordnet sind, unter Berücksichtigung von die Empfänger identifizierenden Daten,
- Mittel zum Berechnen eines zweiten Teils eines einem Empfänger zugeordneten öffentlichen Schlüssels unter Berücksichtigung von den Empfänger identifizierenden Daten,
- Mittel zum Kodieren einer Nachricht mittels einem öffentlichen Schlüssel und
- Mittel zum Dekodieren einer verschlüsselten Nachricht mittels einem privaten Schlüssel auf.

Vorzugsweise sind die Mittel zum Berechnen des ersten Teils aller öffentlicher Schlüssel, die Mittel zum Berechnen eines zweiten Teils eines einem Empfänger zugeordneten öffentlichen Schlüssels, die Mittel zum Kodieren einer Nachricht und die Mittel zum Dekodieren einer verschlüsselten Nachricht als Programme zur Verarbeitung auf einem Computer, insbesondere einem Personal-Computer, ausgebildet. Beispielsweise können die Mittel zum Berechnen eines zweiten Teils eines einem Empfänger zugeordneten öffentlichen Schlüssels, die Mittel zum Kodieren einer Nachricht und die Mittel zum Dekodieren einer verschlüsselten Nachricht in einem Software-Paket zusammengefasst sein, dass sowohl Sender als auch Empfänger von mit dem erfindungsgemäßen Verfahren verschlüsselten Nachrichten zur Verfügung steht. Diese Software-Paket kann zur Verwendung mit Betriebssystemen wie MS-DOS oder MS-Windows 3.1, 95, 98, Me, NT, 2000 der Firma Microsoft, Mac-OS der Firma Apple oder dem freien Betriebssystem Linux ausgebildet sein.

Weitere Vorteile, Merkmale und Anwendungsmöglichkeiten der vorliegenden Erfindung zur Erzeugung von öffentlichen Schlüsseln zur Verschlüsselung von Nachrichten ergeben sich aus der nachfolgenden Beschreibung in Verbindung mit dem in der Zeichnung dargestellten Ausführungsbeispiel.

Die Erfindung wird im folgenden, anhand des in der Zeichnung dargestellten Ausführungsbeispiels, näher beschrieben. In der Beschreibung, in den Patentansprüchen, der Zusammenfassung und in der Zeichnung, werden die in der hinten angeführten Liste der Bezugszeichen verwendeten Begriffe zugeordneten Bezugszeichen verwendet. In der Zeichnung bedeutet:

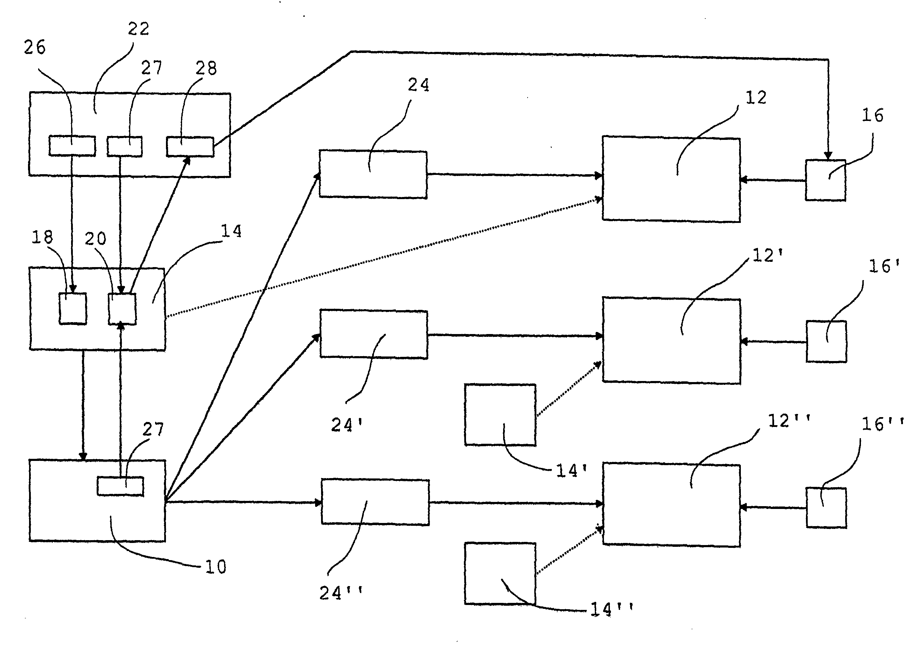

Fig. 1    eine schematische Darstellung des Verfahrens nach der Erfindung

Fig. 1 zeigt schematisch, wie ein Sender 10 verschlüsselte Nachrichten über Übertragungskanäle 24, 24' und 24" an Empfänger 12, 12' und 12" unter Einsatz des erfindungsgemäßen Verfahrens übertragen kann.

Jedem der Empfänger 12, 12', 12" ist jeweils ein privater Schlüssel 16, 16', 16" und ein öffentlicher Schlüssel 14, 14', 14'' zugeordnet. Insofern gleicht das Verfahren den bekannten Public-Key-Verfahren. Als typischer Übertragungskanal sei hier das Internet genannt, über das die Nachrichten als verschlüsselte EMails übertragen werden.

Die privaten Schlüssel 16, 16', 16" sind von einer Schlüsselverteilzentrale 22 erzeugt und den Empfängern 12, 12', 12" zur Verfügung gestellt worden. Bei der Erzeugung der privaten Schlüssel wurden die jeweiligen Empfänger eindeutig bezeichnende bzw. identifizierende Daten verwendet, beispielsweise die Adresse eines Empfängers. Mathematisch ausgedrückt wird ein privater Schlüssel wie folgt berechnet: $pS=f\{Adresse, a, b\}$, wobei a und b zwei nur der Schlüsselverteilzentrale 22 bekannte Primzahlen sind. Zur Berechnung der privaten Schlüssel 16, 16', 16" umfasst die Schlüsselverteilzentrale 22 eine Berechnungsfunktion 26, welche die vorgenannte Funktion f realisiert.

Die Schlüsselverteilzentrale 22 stellt zudem einen ersten Teil 18 für die öffentlichen Schlüssel 14, 14' und 14" zur Verfügung, die jeweiligen Empfängern 12, 12' bzw. 12" zugeordnet sind. Der erste Teil 18 ist für alle öffentlichen Schlüssel 14, 14' und 14'' gleich. Zum Versenden einer verschlüsselten Nachricht erzeugt ein Sender den zweiten Teil des öffentlichen Schlüssels selbst, und zwar anhand der einen Empfänger eindeutig identifizierenden Daten wie die erwähnte Adresse. Die einen Empfänger eindeutig identifizierenden Daten müssen den Daten entsprechen, die bei der Erzeugung der privaten Schlüssel 16, 16' und 16" verwendet wurden.

Im vorliegenden Fall wird der zweite Teil 20 des öffentlichen Schlüssels 14 vom Sender 10 erzeugt, um dem Empfänger 12 eine verschlüsselte Nachricht senden zu können. Die Berechnung des zweiten Teils 20 erfolgt gemäß der gleichen Funktion wie die Berechnungsfunktion 26 der Schlüsselverteilzentrale 22. Allerdings kennt der Sender 10 nicht die beiden geheimen Primzahlen a und b, die der Schlüsselverteilzentrale 22 zur Erzeugung des ersten Teil 18 für die öffentlichen Schlüssel 14, 14' und 14'' bekannt sind. Formelmäßig ausgedrückt ergibt sich als Berechnungsvorschrift für den zweiten Teil öS2 eines öffentlichen Schlüssels $öS2=f\{Adresse\}$.

Die Erzeugung und Übertragung einer verschlüsselten Nachricht von dem Sender 10 an den Empfänger 12 wird nun im folgenden kurz erläutert:

Der Sender 10 holt von der Schlüsselverteilzentrale 22 den ersten Teil 18 (öS1) aller öffentlichen Schlüssel 14, 14' und 14'', sofern er noch nicht in Besitz dieses Teils 18 ist. Dazu lädt der Sender 10 über das Internet von der Internet-Site der Schlüsselverteilzentrale den ersten Teil 18 herunter. Dies kann zur Gewährleistung einer sicheren Übertragung über das Internet mittels des Secure-Sockets-Layer (SSL)-Protokolls erfolgen. SSL stellt sicher, dass die Verbindung zwischen dem Sender 10 und der Schlüsselverteilzentrale 22 authentisch ist, sich also keine andere als die angesprochene Internet-Site der Schlüsselverteilzentrale 22 in die Verbindung einschalten kann. Hierzu sendet die Schlüsselverteilzentrale 22 beim Verbindungsaufbau mit dem Sender 10 ein Zertifikat, dass von einer Zertifizierungsinstanz mit einer digitalen Unterschrift versehen wurde. Der Sender 10 kann sicher sein, dass er mit der richtigen Schlüsselverteilzentrale 22 Kontakt hat, wenn er diesem Zertifikat vertraut.

Nach dem "Download" des ersten Teils 18 aller öffentlichen Schlüssel 14, 14' und 14" erzeugt der Sender 10 den zweiten Teil 20 (öS2) des öffentlichen Schlüssels 14 für den Empfänger 12 selbst. Hierzu verwendet er die Berechnungsfunktion 26 zur Erzeugung der privaten Schlüssel 16, 16', 16", die den Empfängern 12, 12', 12" zugeordnet sind, und gibt die ihm bekannte Adresse des Empfängers 12 an, die auch zur Erzeugung des privaten Schlüssels 16 des Empfängers genutzt wurde. Anhand der Berechnungsfunktion 26 und der Adresse des Empfängers 12 wird nun der zweite Teil 20 des öffentlichen Schlüssels 14 erzeugt. Der zweite Teil 20 "individualisiert" sozusagen den öffentlichen Schlüssel 14 für den Empfänger 12.

Nunmehr ist der Sender 10 im Besitz des vollständigen öffentlichen Schlüssels 14 (öS=(öS1, öS2)) und kann die Nachricht für den Empfänger 12 verschlüsseln und an diesen versenden. Der Empfänger 12 entschlüsselt die empfangene Nachricht mit seinem privaten Schlüssel 14. Bei der Entschlüsselung wird die Übereinstimmung der dem Empfänger 12 individuell zugeordneten Daten, also seine Adresse, überprüft.

Die Erfindung zeichnet sich dadurch aus, dass ein öffentlicher Schlüssel zum Verschlüsseln einer Nachricht für einen Empfänger zumindest teilweise unter Berücksichtigung von den Empfänger bezeichnenden Daten berechnet wird. Die Berechnung kann beispielsweise durch einen Sender erfolgen, der in Kenntnis der Daten ist. Hierdurch wird die Gefahr von Manipulationen von öffentlichen Schlüsseln verringert. Zudem ist das Verfahren relativ unempfindlich gegenüber Ausfällen von Schlüsselverteilzentralen und benötigt wenig Ressourcen, da der erste Teil jedes nach dem erfindungsgemäßen Verfahren erzeugten öffentlichen Schlüssels für alle öffentlichen Schlüssel gleich ist. Ein einmaliges Laden des ersten Teils reicht daher aus, damit ein Sender Nachrichten für beliebige Empfänger von nach dem erfindungsgemäßen Verfahren verschlüsseln kann.

In der erfindungsgemäßen Ausführungsform des Verfahrens ist der erste Teil des öffentlichen Schlüssels nicht durch 3 teilbar. Aus einer Adresse des Empfängers wird ein Hash-Wert berechnet. Dieser Hash-Wert besitzt eine derartige Länge, dass 3 potenziert mit dem größtmöglichen Hash-Wert kleiner als die Hälfte des ersten Teils des öffentlichen Schlüssels ist. Aus dem Hash-Wert lässt sich die Adresse nicht "zurückberechnen". Der zweite Teil des öffentlichen Schlüssels wird dann dadurch berechnet, dass 3 mit dem berechneten Hash-Wert potenziert wird. Dies hat sich als guter Kompromiss zwischen Sicherheit und Berechnungsaufwand erwiesen.

**Patentansprüche**

1. Verfahren zur rechnergestützten Erzeugung von öffentlichen Schlüsseln zur Verschlüsselung von Nachrichten, wodurch eine Nachricht mit einem öffentlichen Schlüssel (14) verschlüsselbar und mit einem zu dem öffentlichen Schlüssel (14) passenden privaten Schlüssel (16) entschlüsselbar ist, und sich der öffentliche Schlüssel (14) aus einem ersten und einem zweiten Teil (18, 20) zusammensetzt, der erste Teil (18) des öffentlichen Schlüssels (14) für alle Empfänger (12, 12', 12'') verschlüsselter Nachrichten gleich ist und der zweite Teil (20) des öffentlichen Schlüssels (14) unter Berücksichtigung von einen Empfänger (12) eindeutig bezeichnenden, individuellen Daten berechnet wird, **dadurch gekennzeichnet, dass** der erste Teil (18) des öffentlichen Schlüssels (14) nicht durch 3 teilbar ist, aus den individuellen Daten des Empfängers (12) ein Hash-Wert berechnet wird und der zweite Teil (20) des öffentlichen Schlüssels (14) durch 3 potenziert mit dem berechneten Hash-Wert berechnet wird.

2. Verfahren nach Anspruch 1, **dadurch gekennzeichnet, dass** der erste Teil (18) des öffentlichen Schlüssels (14) und der private Schlüssel (16, 16', 16'') von einer Schlüsselverteilzentrale (22) erzeugt und zur Verfügung gestellt werden.

3. Verfahren nach Anspruch 2, **dadurch gekennzeichnet, dass** der erste Teil (18) des öffentlichen Schlüssels (14) als Produkt zweier Primzahlen berechnet wird, die nur der Schlüsselverteilzentrale (22) bekannt sind.

4. Verfahren nach einem der vorangehenden Ansprüche, **dadurch gekennzeichnet, dass** bei der Berechnung des zweiten Teils (20) des öffentlichen Schlüssels (14) eine dem Empfänger (12) zugeordnete Telefonnummer, Adresse, E-Mail-Adresse und/oder dessen Name und Geburtsdatum verwendet werden.

5. Verfahren nach Anspruch 4, **dadurch gekennzeichnet, dass** zur Berechnung des zweiten Teils (20) des öffentlichen Schlüssels (14) die folgenden Bedingungen erfüllt werden: öS2 < (a-1) (b-1) und öS2 ist teilerfremd zu (a-1) (b-1), wobei der zweite Teil (20) als öS2 und die beiden Primzahlen als a, b bezeichnet sind.

6. Verfahren nach einem der vorangehenden Ansprüche, **dadurch gekennzeichnet, dass** die gleiche Berechnungsfunktion zur Berechnung des öffentlichen Schlüssels (14) des Empfängers (12) und dessen privaten Schlüssels (16) verwendet wird.

7. Verfahren nach einem der vorhergehenden Ansprüche, **dadurch gekennzeichnet, dass** ein Hash-Wert mit einer Länge verwendet wird, sodass der größtmögliche Hash-Wert kleiner als die Hälfte des ersten Teils (18) des öffentlichen Schlüssels (14) ist.

8. System zur Durchführung des Verfahrens nach einem der vorangehenden Ansprüche, mit

- einer Internet-Site als Schlüsselverteilzentrale (22), mittels deren ein erster Teil (18) aller öffentlichen Schlüssel (14, 14', 14'') zum Herunterladen zur Verfügung steht,
- Mitteln (26) zum Berechnen des ersten Teils (18) aller öffentlichen Schlüssel (14, 14', 14'') und privaten Schlüssel (16, 16', 16''), die Empfängern (12, 12', 12'') zugeordnet sind, unter Berücksichtigung von die Empfänger (12, 12', 12'') identifizierenden Daten,
- Mitteln zum Berechnen eines zweiten Teils (20) eines einem Empfänger (12) zugeordneten öffentlichen Schlüssels (14) unter Berücksichtigung von den Empfänger (12) identifizierenden, individuellen Daten,

- Mitteln 4 zum Kodieren einer Nachricht mittels einem öffentlichen Schlüssel (14, 14', 14") und
- Mitteln 4 zum Dekodieren einer verschlüsselten Nachricht mittels eines privaten Schlüssels (16, 16' , 16")

9. System nach Anspruch 8, **dadurch gekennzeichnet, dass** die Mittel (26) zum Berechnen des ersten Teils (18) aller öffentlicher Schlüssel (14, 14', 14"), die Mittel zum Berechnen eines zweiten Teils (20) eines einem Empfänger (12) zugeordneten öffentlichen Schlüssels (14), die Mittel zum Kodieren einer Nachricht und die Mittel zum Dekodieren einer verschlüsselten Nachricht als Programme zur Verarbeitung auf einem Computer, insbesondere einem Personal-Computer, ausgebildet sind.

**Revendications**

1. Procédé de génération, assisté par ordinateur, de clés publiques pour le cryptage d'informations, permettant de crypter une information moyennant une clé publique (14) et de la décrypter moyennant une clé privée (16) associée à la clé publique (14), la clé publique (14) étant composée d'une première et d'une deuxième partie (18, 20), la première partie (18) de la clé publique (14) étant la même pour tous les destinataires (12, 12', 12") d'informations cryptées et la deuxième partie (20) de la clé publique (14) étant calculée en prenant en compte des données individuelles désignant un destinataire (12) de manière non équivoque, **caractérisé en ce que** la première partie (18) de la clé publique (14) n'est pas divisible par 3, **en ce qu'**une valeur Hash est calculée à partir des données individuelles du destinataire (12) et **en ce que** la deuxième partie (20) de la clé publique (14) est calculée en élevant 3 à la puissance de la valeur Hash calculée.

2. Procédé selon la revendication 1, **caractérisé en ce que** la première partie (18) de la clé publique (14) et la clé privée (16,16',16") sont générées et mises à disposition par un centre de distribution de clés (22).

3. Procédé selon la revendication 2, **caractérisé en ce que** la première partie (18) de la clé publique (14) est calculée comme produit de deux nombres premiers connus du seul centre de distribution de clés (22).

4. Procédé selon l'une des revendications précédentes, **caractérisé en ce qu'**un numéro de téléphone, une adresse, une adresse électronique associés au destinataire (12) et/ou son nom et sa date de naissance sont utilisés pour le calcul de la deuxième partie (20) de la clé publique (14).

5. Procédé selon la revendication 4, **caractérisé en ce que** les conditions suivantes sont remplies pour le calcul de la deuxième partie (2) de la clé publique (14) : ôS2 < (a-1) (b-1) et öS2 et (a-1) (b-1) sont premiers entre eux, la deuxième partie (20) étant désignée par öS2 et les deux nombres premiers étant désignés par a, b.

6. Procédé selon l'une des revendications précédentes, **caractérisé en ce que** la même fonction de calcul est utilisée pour le calcul de la clé publique (14) du destinataire (12) et de la clé privée (16) de celui-ci.

7. Procédé selon l'une des revendications précédentes, **caractérisé en ce qu'**il utilise une valeur Hash d'une longueur de manière que la valeur Hash maximale possible soit plus petite que la moitié de la première partie (18) de la clé publique (14).

8. Système pour la mise en oeuvre du procédé selon l'une des revendications précédentes, comportant

    - un site internet comme centre de distribution de clés (22) moyennant lequel une première partie (18) de toutes les clés publiques (14,14', 14") est disponible pour téléchargement,
    - des moyens (26) pour le calcul de la première partie (18) de toutes les clés publiques (14,14', 14") et des clés privés (16,16',16") associées à des destinataires (12,12',12") en prenant en compte des données identifiant les destinataires (12,12',12"),
    - des moyens pour le calcul d'une deuxième partie (20) d'une clé publique (14) associée à un destinataire (12) en prenant en compte des données individuelles identifiant le destinataire (12),
    - des moyens pour le codage d'une information moyennant une clé publique (14,14', 14") et
    - des moyens pour le décodage d'une information cryptée moyennant une clé privée (16, 16', 16").

9. Système selon la revendication 8, **caractérisé en ce que** les moyens (26) pour le calcul de la première partie (18) de toutes les clés publiques (14,14', 14"), les moyens pour le calcul d'une deuxième partie (20) d'une clé publique (14) associée à un destinataire (12), les moyens pour le codage d'une information et les moyens pour le décodage d'une information cryptée sont réalisés sous la forme de programmes de traitement sur un ordinateur, notamment un ordinateur personnel.

## Claims

1. Method for computer-assisted generation of public keys for encryption of messages by which means a message may be encrypted with a public key (14) and may be decrypted with a private key (16) matching the public key (14), and wherein the public key (14) is composed of a first and a second part (18, 20), the first part (18) of the public key (14) being identical for the encrypted messages of all recipients (12, 12', 12") and the second part (20) of the public key (14) being calculated under consideration of personal data uniquely identifying a recipient (12), **characterized in that** the first part (18) of the public key (14) is not divisible by 3, a hash value is calculated from the personal data of the recipient (12), and the second part (20) of the public key (14) is calculated by raising 3 to the power of the calculated hash value.

2. Method according to claim 1, **characterized in that** the private key (16, 16', 16") and the first part (18) of the public key (14) are generated by and made available by a key distribution center (22).

3. Method according to claim 2, **characterized in that** the first part (18) of the public key (14) is calculated as the product of two prime numbers known only to the key distribution center (22).

4. Method according to any one of the preceding claims, **characterized in that** a telephone number / address / e-mail address associated with the recipient (12) and/or his name and birth date are used in calculating the second part (20) of the public key (14).

5. Method according to claim 4, **characterized in that** the following conditions are fulfilled for calculating the second part (20) of the public key (14): öS2 < (a-1) (b-1), and öS2 is relatively prime to (a-1) (b-1), where the second part (20) is identified as öS2 and the two prime numbers as a, b.

6. Method according to any one of the preceding claims, **characterized in that** the same calculation function is used for calculating the recipient's (12) public key (14) and his private key (16).

7. Method according to any one of the preceding claims, **characterized in that** a hash value is used having a length such that the largest possible hash value is smaller than half the first part (18) of the public key (14).

8. System for carrying out the method according to any one of the preceding claims, having

   - an Internet site as key distribution center (22), by means of which site a first part (18) of all public keys (14, 14', 14") is available for downloading,
   - means (26) for calculating the first part (18) of all public keys (14, 14', 14") and private keys (16, 16', 16") associated with the recipients (12, 12', 12") under consideration of data identifying the recipients (12, 12', 12"),
   - means for calculating a second part (20) of a public key (14) associated with a recipient (12) under consideration of personal data identifying the recipient (12),
   - means for encoding a message by means of a public key (14, 14', 14"), and
   - means for decoding an encrypted message by means of a private key (16, 16', 16").

9. System according to claim 8, **characterized in that** the means (26) for calculating the first part (18) of all public keys (14, 14', 14"), the means for calculating a second part (20) of a public key associated with a recipient (12), the means for encoding a message, and the means for decoding an encrypted message, all take the form of programs for processing on a computer, in particular on a personal computer.

EP 1 374 479 B1